# EUROPÄISCHE PATENTSCHRIFT

(11) **EP 1 753 992 B1**
(45) Veröffentlichungstag und Bekanntmachung des Hinweises auf die Patenterteilung: **08.10.2008**
(21) Anmeldenummer: 05751664.3
(22) Anmeldetag: 23.05.2005
(51) Int. Cl.: F16L 11/12

(54) **DRUCKMITTELFÜHRENDER BREMSSCHLAUCH EINES SCHIENENFAHRZEUGS**
BRAKE HOSE THAT SUPPLIES HYDRAULIC FLUID FOR A RAIL VEHICLE
FLEXIBLE DE FREIN CONTENANT UN AGENT DE PRESSION POUR VEHICULE FERROVIAIRE

(30) Priorität: 24.05.2004 DE 102004025853
(43) Veröffentlichungstag der Anmeldung: 21.02.2007
(73) Patentinhaber: KNORR-BREMSE Systeme für Schienenfahrzeuge GmbH, 80809 München (DE)
(72) Erfinder: REICHERT, Peter, HU-1015 Budapest (HU); SZIGETVARI, Istvan, HU-2220 Vecses (HU)
(74) Vertreter: Schönmann, Kurt
(86) Internationale Anmeldenummer: PCT/EP2005/005545
(87) Internationale Veröffentlichungsnummer: WO 2005/116502

(56) Entgegenhaltungen:
- EP-A- 1 348 538
- US-A- 4 810 835
- US-A- 5 671 780
- US-A1- 2002 097 966
- US-A1- 2004 033 035

## Beschreibung

### Stand der Technik

Die Erfindung betrifft einen druckmittelführenden Bremsschlauch eines Schienenfahrzeugs gemäß Patentanspruch 1.

Bremsschläuche in Schienenfahrzeugen schaffen beispielsweise Druckluftverbindungen zwischen dem Wagenkasten und den Drehgestellen bzw. zwischen gekuppelten Fahrzeugen, zur Herstellung einer durchgehenden Hauptluftleitung und einer durchgehenden Hauptluftbehälterieitung im Fahrzeugverband.

Unfälle mit Personenschäden durch Feuer haben bei einigen Bahngesellschaften die Forderung nach einem verbesserten Brandschutz aufgeworfen. Hierbei ist wesentlich, dass sich das Schienenfahrzeug auch im Brandfall, beispielsweise bei einem Brand in einem Tunnel, aus eigener Kraft aus der Gefahrenzone bewegen kann. Dies ist jedoch nur mit gelöster Bremse, d.h. mit funktionsfähigen Bremsschläuchen möglich, da zum Lösen üblicher Druckluftbremsen ein Druck von ca. 5 bar in der Hauptluftleitung herrschen muss. Um dies sicher zu stellen, besteht die Anforderung, dass Bremsschläuche bei einer offenen Beflammung mit 36 W und 600 °C bis 800 °C in 18 cm Höhe mindestens 15 Minuten einen Druck von 5 bar halten können müssen.

In der US 2002/097966 A wird ein schwer entflammbarer Schlauch offenbart, mit einer ersten inneren Lage aus Gummi, einer zweiten, wärmeleitenden Lage aus Aluminium oder Kupfer, einer dritten feuerfesten Lage, einer vierten Lage aus Polyesterfilm und einer fünften Lage aus Gummi.

Der vorliegenden Erfindung liegt die Aufgabe zugrunde, einen Bremsschlauch eines Schienenfahrzeugs derart weiter zu entwickeln, dass er eine möglichst hohe und langanhaltende Temperaturbeständigkeit aufweist, mindestens jedoch die oben beschriebenen Anforderungen erfüllt. Darüber hinaus sollen auch die Anforderungen an die Widerstandseigenschaften des Bremsschlauches gegen mechanische Beanspruchung und gegen Umwelteinflüsse, wie sie beispielsweise in der UIC 830-1V festgelegt sind, erfüllt werden.

Diese Aufgabe wird erfindungsgemäß durch die Merkmale von Patentanspruch 1 gelöst.

### Vorteile der Erfindung

Die Erfindung schlägt vor, den Bremsschlauchmantel des Bremsschlauchs aus wenigstens folgenden, in der genannten Reihenfolge aufeinander angeordneten Schichten oder Lagen aufzubauen:
a) Einer ersten, inneren Lage beinhaltend Gummi,
b) einer zweiten, hochfesten und hitzebeständigen Lage,
c) einer dritten Lage beinhaltend Gummi,
d) einer vierten Lage, beinhaltend feuerbeständiges Glasgewebe, und
e) einer fünften Lage, beinhaltend Gummi, wobei
f) der Gummi der dritten Lage (8) nicht entflammbar und durch Verkohlung thermisch isolierend wirkt, und wobei
g) die zweite hochfeste und hitzebeständige Lage eine Armierung aus Kevlar beinhaltet.

Dieser Aufbau gewährleistet eine äußerst hohe Temperaturbeständigkeit des Bremsschlauches bei zugleich hoher Verschleißfestigkeit gegen Umwelteinflüsse und mechanische Belastungen.

Wenn für die dritte Lage ein Gummi gewählt wird, der nicht entflammbar ist und durch Verkohlung thermisch isolierend wirkt, resultiert dies in einer vorteilhaften Selbstverstärkung des Feuerschutzes. Das feuerbeständige Glasgewebe der vierten Lage hat die Funktion, aufgrund von Hitzeinwirkung oder Brand verkohlte, bröselige Rückstände der darunter liegenden, dritten Lage aus Gummi am Abfallen vom Bremsschlauchmantel zu hindern. Denn diese Rückstände wirken vorteilhaft wärmeisolierend und vor offener Beflammung schützend für die darunter liegenden Lagen, insbesondere für die zweite, druckhaltende Lage aus hochfestem und hitzebeständigem Material, welche eine Armierung aus Kevlar beinhaltet.

Aufgrund des speziellen Aufbaus des Bremsschlauchmantels neigt er bei Beflammung nicht frühzeitig zum plötzlichen Platzen, wie dies bei üblichen Bremsschläuchen der Fall ist, was regelmäßig große Öffnungen mit hoher Leckage bedingt. Demgegenüber kommt es bei einem Bremsschlauch gemäß der Erfindung nicht zum Platzen, sondern nach erst ca. 15 Minuten lediglich zu geringen Leckagen, was innerhalb von bestimmten Grenzen kompensierbar ist. Gegenüber herkömmlichen Feuerschutzschläuchen, bei welchen über herkömmliche Bremsschläuche industrielle Brandschutzschläuche gezogen werden, ergibt sich durch die Mehrfacharmierung des erfindungsgemäßen Bremsschlauchs auch ein verbesserter mechanischer Schutz gegen Schlag-, Stoßeinwirkung bzw. Reibung.

Durch die in den Unteransprüchen aufgeführten Maßnahmen sind vorteilhafte Weiterbildungen und Verbesserungen der in Patentanspruch 1 angegebenen Erfindung möglich.

Besonders bevorzugt ist die erste, innerste Lage aus Gummi nahtlos extrudiert. Der Gummi der fünften Lage kann beispielsweise auf die vierte, aus einer Glasfaser-Armierung bestehende Lage vulkanisiert sein. Der Aufbau des Bremsschlauchs wird durch die nachfolgende Beschreibung eines Ausführungsbeispiels der Erfindung deutlich.

### Zeichnungen

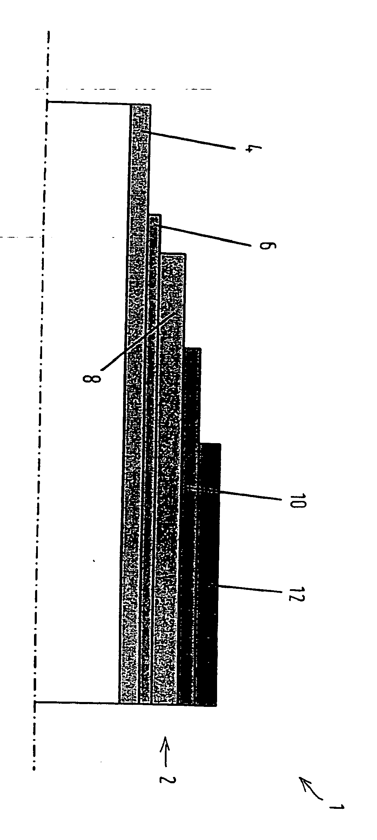

Nachstehend ist ein Ausführungsbeispiel der Erfindung in der Zeichnung dargestellt und in der nachfolgenden Beschreibung näher erläutert. In der Zeichnung zeigt die einzige Figur eine Querschnittsdarstellung eines Bremsschlauchs gemäß einer bevorzugten Ausführungsform der Erfindung.

### Beschreibung des Ausführungsbeispiels

Der in der Figur insgesamt mit 1 bezeichnete Bremsschlauch ist beispielsweise ein von einer zwischen zwei festgekuppelten Wageneinheiten angeordneten Bremskupplung weg ragender Bremsschlauch als Teilabschnitt einer durchgehenden Hauptluftleitung der Bremseinrichtung.

Der Bremsschlauch 1 hat einen Bremsschlauchmantel 2, welcher aus wenigstens folgenden, in der genannten Reihenfolge aufeinander angeordneten Schichten oder Lagen aufgebaut ist:
a) Einer ersten, inneren Lage 4 beinhaltend Gummi,
b) einer zweiten, hochfesten und hitzebeständigen Lage 6,
c) einer dritten Lage 8 beinhaltend Gummi,
d) einer vierten Lage 10 beinhaltend feuerbeständiges Glasgewebe,
e) einer fünften Lage 12 beinhaltend Gummi.

Besonders bevorzugt besteht die erste, innere Lage 4 vollständig aus Gummi und ist aus diesem Material nahtlos extrudiert. Die zweite, hochfeste und hitzebeständige Lage 6 besteht aus Aramid (Kevlar) und die dritte Lage 8 aus einem Gummi, der nicht oder schwer entflammbar ist und durch Verkohlung thermisch isolierend wirkt. Der Gummi der fünften Lage 12 kann beispielsweise auf die vierte, aus einer Glasfaser-Armierung bestehende Lage 10 vulkanisiert sein.

### Bezugszeichenliste

- 1: Bremsschlauch
- 2: Bremsschlauchmantel
- 4: erste Lage
- 6: zweite Lage
- 8: dritte Lage
- 10: vierte Lage
- 12: fünfte Lage

## Patentansprüche

1. Druckmittelführender Bremsschlauch (1) eines Schienenfahrzeugs, umfassend einen Bremsschlauchmantel (2), welcher aus wenigstens folgenden, in der genannten Reihenfolge aufeinander angeordneten Schichten oder Lagen aufgebaut ist:
a) Einer ersten, inneren Lage (4) beinhaltend Gummi,
b) einer zweiten, hochfesten und hitzebeständigen Lage (6),
c) einer dritten Lage (8) beinhaltend Gummi,
d) einer vierten Lage (10) beinhaltend feuerbeständiges Glasgewebe,
e) einer fünften Lage (12) beinhaltend Gummi, wobei
f) der Gummi der dritten Lage (8) nicht entflammbar und durch Verkohlung thermisch isolierend wirkt, und wobei
g) die zweite hochfeste und hitzebeständige Lage (6) eine Armierung aus Kevlar beinhaltet.

2. Bremsschlauch nach Anspruch 1, **dadurch gekennzeichnet, dass** der Gummi der fünften Lage (12) auf die vierte Lage (10) vulkanisiert ist.

3. Bremsschlauch nach einem der vorhergehenden Ansprüche, **dadurch gekennzeichnet, dass** die erste, innere Lage (4) aus Gummi nahtlos extrudiert ist.

## Claims

1. Pressure fluid-carrying brake hose (1) of a rail vehicle, comprising a brake hose cover (2) made up from at least the following layers placed on top of one another in the stated sequence:
a) a first, inner layer (4) containing rubber,
b) a second, high-strength and heat resistant layer (6),
c) a third layer (8) containing rubber,
d) a fourth layer (10) containing a flame resistant glass fabric,
e) a fifth layer (12) containing rubber, wherein
f) the rubber of the third layer (8) is non-inflammable and has a thermal insulation effect as a result of carbonisation, and wherein
g) the second, high-strength and heat resistant layer (6) contains a Kevlar reinforcement.

2. Brake hose according to claim 1, **characterised in that** the rubber of the fifth layer (12) is vulcanised onto the fourth layer (10).

3. Brake hose according to any of the preceding claims, **characterised in that** the first, inner rubber layer (4) is seamlessly extruded.

## Revendications

1. Flexible de frein (1) alimentant un milieu sous pression dans un véhicule ferroviaire, comprenant un gainage (2) du flexible de frein jacket (2), qui est composé d'au moins les couches ou plis suivants, disposés l'un sur l'autre en l'ordre indiqué:
(a) une première couche intérieure (4) contenant du caoutchouc,
(b) une deuxième couche (6) à résistance élevée et résistante aux températures élevées,
(c) une troisième couche (8) contenant du caoutchouc,
(d) une quatrième couche (10) contenant du verre tissé réfractaire,
(e) une cinquième couche (12) contenant du caoutchouc, dans lequel
(f) le caoutchouc dans ladite troisième couche (8) n'est pas inflammable et crée un effet d'isolation thermique en vertu de carbonisation, et dans lequel
(g) ladite deuxième couche (6) à résistance élevée et résistante aux températures élevées comprend une armature en Kevlar.

2. Flexible de frein selon la revendication 1, **caractérisé en ce que** le caoutchouc dans ladite cinquième couche (12) est vulcanisée sur ladite quatrième couche (10).

3. Flexible de frein selon une quelconque des revendications précédentes, **caractérisé en ce que** ladite première couche intérieure (4) est boudinée de caoutchouc sans soudure.
